# EUROPÄISCHE PATENTSCHRIFT

(11) **EP 2 113 174 B1**
(45) Veröffentlichungstag und Bekanntmachung des Hinweises auf die Patenterteilung: **01.02.2012**
(21) Anmeldenummer: 09001846.6
(22) Anmeldetag: 10.02.2009
(51) Int. Cl.: A23L 1/237, A23L 1/221, A23L 1/223, A23L 1/00, B30B 11/18

(54) **Nahrungsmittelerzeugnis**
Food product
Produit d'alimentation

(30) Priorität: 22.04.2008 DE 102008020137; 16.01.2009 DE 202009000501 U
(43) Veröffentlichungstag der Anmeldung: 04.11.2009
(73) Patentinhaber: Franz und Paul Mayer GbR, 83313 Siegsdorf (DE)
(72) Erfinder: Schwenn, Nikolaus, 83435 Bad Reichenhall (DE); Mayer, Paul, 83313 Siegsdorf (DE)
(74) Vertreter: Manitz, Finsterwald & Partner GbR

(56) Entgegenhaltungen:
- EP-A- 0 090 571
- EP-A- 0 780 058
- EP-A2- 2 119 798
- WO-A-2005/092119
- DE-A1- 2 824 827
- DE-U1- 20 318 323
- DE-U1- 29 620 427
- GB-A- 2 279 943

## Beschreibung

Die Erfindung betrifft ein Nahrungsmittelerzeugnis in Form einer ein kristallines Lebensmittel enthaltenden oder aus dem kristallinen Lebensmittel bestehenden, formstabilen Einheit und ein Verfahren zur Herstellung eines derartigen Nahrungsmittelerzeugnisses.

Salze können auf verschiedene Weisen hergestellt werden. Beispielsweise kann Salz im Bergbau bergmännisch abgebaut oder mit Wasser herausgelöst werden. Darüber hinaus kann Salz auch aus Meerwasser gewonnen werden. Am Ende der jeweiligen Gewinnung liegt das Salz meist in körniger oder granularer Form vor. Verschiedene Verwendungen und/oder Einsatzgebiete des Salzes erfordern jedoch verschiedene Darreichungsformen. Dies gilt für kristalline Lebensmittel im Allgemeinen.

Relevanter Stand der Technik ist bekannt aus EP 0 090 571 A, DE 203 18 323 U1, GB 2 279 943 A, EP 0 780 058 A, WO 2005/092119 A, DE 28 24 827 A1 und DE 296 20 427 U1. Stand der Technik gemäß Artikel 54 (3) EPÜ ist bekannt aus EP 2 119 798 A2.

Der Erfindung liegt die Aufgabe zugrunde, ein Nahrungsmittelerzeugnis bzw. ein Verfahren der eingangs genannten Art bereitzustellen, das eine von den bekannten Formen abweichende Darreichungsform aufweist bzw. zu einer von den bekannten Formen abweichenden Darreichungsform führt.

Bezüglich eines Nahrungsmittelerzeugnisses wird diese Aufgabe durch die Merkmale von Anspruch 1 und bezüglich eines Verfahrens durch die Merkmale von Anspruch 8 gelöst.

Das kristalline Ausgangsmaterial für das erfindungsgemäße Nahrungsmittelerzeugnis ist rieselfähig. Die Rieselfähigkeit kann insbesondere ohne chemische Zusätze und dadurch erreicht werden, dass das Ausgangsmaterial - gegebenenfalls abgesehen von einer durch die Lagerung bedingten Feuchtigkeitsaufnahme - zumindest im Wesentlichen trocken ist.

Überraschenderweise wurde nun gefunden, dass das rieselfähige kristalline Ausgangsmaterial unter bloßem Druck zu kompaktierten Plättchen verpresst werden kann, die zur weiteren Handhabung eine ausreichende Formstabilität aufweisen. Derartige Plättchen können aufgrund Ihrer Formstabilität und/oder Form beispielsweise in herkömmlichen Handmühlen oder zur Speisendekoration eingesetzt werden.

Bei dem Salz kann es sich um jede Art von Salz handeln. Beispielsweise kann das Salz ein Steinsalz, Meeressalz oder Salinensalz sein. Das Salz kann als Natursalz oder als raffiniertes Salz vorliegen. Als weiteres kristallines Lebensmittel kommt Zucker in Betracht.

Das Ausgangsmaterial liegt dabei in körniger oder granularer Form vor, wie es im kommerziellen Handel, und damit einfach und günstig, erhältlich ist.

Vorteilhafte Ausbildungen der Erfindung sind den Unteransprüchen, der Beschreibung und der Zeichnung zu entnehmen.

Im Gegensatz zu Würfelzucker, bei dem angefeuchteter Zucker in Formen gepresst und wieder getrocknet wird, wobei durch die Feuchtigkeit ein Zuckerkristall klebrig wird und mit den anderen Kristallen eine relativ stabile Bindung eingeht, kann das Verpressen ohne Zugabe von Feuchtigkeit erfolgen. Eine separate vorherige Anfeuchtung des kristallinen Lebensmittels ist nicht notwendig.

Darüber hinaus kann das Verpressen auch ohne Zusatz eines Binde- oder Klebemittels erfolgen, wie dies bei Herstellungsverfahren für andere Nahrungsmittelerzeugnisse der Fall ist.

Außerdem kann das Verpressen auch pressformlos erfolgen. Auf eine Pressform, wie sie beispielsweise bei der Herstellung von Würfelzucker verwendet wird, kann also verzichtet werden. Hierdurch wird insbesondere auch ermöglicht, mehrere Plättchen zumindest im Wesentlichen gleichzeitig herzustellen.

Vorzugsweise werden Körner oder Granulate verpresst, die einen Durchmesser von 0 bis 2 mm, insbesondere 1 bis 1,5 mm, bevorzugt 1,2 bis 1,3 mm, aufweisen. Hierbei ergeben sich besonders formstabile Plättchen.

Bevorzugt weisen mehrere derartiger Plättchen dieselbe Dicke und/oder voneinander abweichende Formen und/oder Größen auf. Dieselbe Dicke kann insbesondere mit dem nachstehend erläuterten Walzwerk erreicht werden. Die voneinander abweichenden Formen und/oder Größen können sich insbesondere dadurch ergeben, dass bei der Herstellung auf Pressformen verzichtet wird. Voneinander abweichende Formen und/oder Größen vermitteln einen natürlicheren bzw. naturbelasseneren Eindruck als gleichgeformte und/oder gleichgroße Plättchen.

Insbesondere aus diesem Grund weist das Plättchen vorzugsweise eine ungleichmäßige Form auf. Die ungleichmäßige Form kann sich insbesondere wiederum dadurch ergeben, dass bei der Herstellung auf Pressformen verzichtet wird.

Bevorzugt weist das jeweilige Plättchen eine Dicke von 0,1 bis 3 mm, insbesondere von 0,5 bis 1,5 mm, bevorzugt 0,5 bis 1 mm, auf. Die übrige Plättchenerstreckung reicht bevorzugt bis zu 6 cm, insbesondere bis zu 4 cm, insbesondere von 0,5 bis 2 cm, bevorzugt 1 bis 1, 5 cm. Derartig geformte Plättchen sind gut handhabbar und gut weiterverarbeitbar, beispielsweise in einer herkömmlichen Handmühle.

Gemäß der Erfindung ist das kristalline Lebensmittel mit essbaren Zusatzstoffen, ausgewählt aus Gewürzen oder Kräutern versetzt, wobei das kristalline Lebensmittel vor und/oder bei dem Verpressen mit den Zusatzstoffen versetzt wird. Das oder die Plättchen bestehen also nicht nur aus dem kristallinen Lebensmittel, sondern enthalten zusätzlich noch die essbaren Zusatzstoffe. Bei den essbaren Zusatzstoffen, insbesondere natürlichen Zutaten, kann es sich beispielsweise um ein Gewürz wie Pfeffer, Kräuter, Blüten, Gemüsesäfte oder sonstige pflanzliche Stoffe handeln. Hierdurch ergeben sich weitere Produktarten für das kristalline Lebensmittel, das dann zusammen mit den weiteren Zusatzstoffen verwendbar und/oder weiter verarbeitbar ist.

Bevorzugt sind die essbaren Zusatzstoffe aus der Gruppe ausgewählt, die aus insbesondere gerebelten Kräutern, einem insbesondere ölhaltigen Gewürz, einer Kräutermischung, einer Gewürzmischung und beliebigen Kombinationen aus zwei oder mehr der vorstehenden essbaren Zusatzstoffe besteht. Bei den gerebelten Kräutern kann es sich beispielsweise um Oregano, Rosmarin, Dill, Petersilie oder Bohnenkraut handeln. Bei den ölhaltigen Gewürzen kann es sich beispielsweise um Pfeffer, Chili oder Knoblauch handeln.

Nach einer Ausbildung der Erfindung enthält das Plättchen 1 bis 15 Gew.-%, insbesondere 4 bis 10 Gew.-%, bevorzugt 6 bis 8 Gew.-%, Kräuter. Nach einer weiteren Ausbildung der Erfindung enthält das Plättchen 1 bis 10 Gew.%, insbesondere 3 bis 6 Gew.-%, bevorzugt 4 bis 5 Gew.%, Gewürz. Nach einer anderen Ausbildung der Erfindung enthält das Plättchen 1 bis 10 Gew.%, insbesondere 2 bis 8 Gew.%, bevorzugt 4 bis 6 Gew.%, Kräuter-, Gewürz- oder Kräuter-Gewürzmischung. In den vorgenannten Bereichen kann eine besonders hohe Stabilität und/oder gleiche Durchmischung der mit dem jeweiligen essbaren Zuatzstoff versehenen Plättchen erreicht werden.

Vorzugsweise erfolgt das Verpressen mittels eines Walzwerks, dem das rieselfähige Lebensmittel zugeführt wird. Walzwerke haben sich bei der Herstellung der Plättchen insbesondere im Hinblick auf deren Formstabilität als besonders geeignet herausgestellt.

Vorzugsweise umfasst das Walzwerk zwei gegenläufige Walzen und einen dazwischen ausgebildeten Spalt, in dem das rieselfähige Lebensmittel gepresst wird. Durch die Dicke des Spalts an seiner dünnsten Stelle wird insbesondere die Dicke der Plättchen vorgegeben. Ein derartiges Walzwerk kann beispielsweise wie ein Flocker für Getreide aufgebaut sein. Durch die beiden Walzen wird für das zugeführte kristalline Lebensmittel eine Art Trichter geschaffen, wobei das kristalline Lebensmittel aufgrund der daraus resultierenden kontinuierlichen Querschnittsverengung des Spaltes unter Druck verpresst wird.

Weiterhin ist es von Vorteil, wenn das rieselfähige Lebensmittel den Walzen derart zugeführt wird, dass sich über dem Spalt ein Rückstau an kristallinem Lebensmittel ausbildet. Das rückgestaute Lebensmittel stellt einen ausreichenden und gleichmäßigen Druck sicher, welcher beim Verpressen zur Anwendung kommt, wodurch besonders formstabile Plättchen herstellbar sind.

Bevorzugt weisen die Walzen jeweils einen Durchmesser von bis zu 50 cm auf, insbesondere von bis zu 30 cm. Die Walzenoberfläche kann profiliert sein. Vorzugsweise werden die Walzen mit einer Drehzahl von 10 bis 200 Umdrehungen/Minute betrieben, insbesondere von 30 bis 150 Umdrehungen/Minute.

Zur Erhöhung der Uniformität der Plättchen und/ oder der Ausbeute an Plättchen kann rieselfähiges Lebensmittel, das bei einem Durchlauf durch das Walzwerk nicht verpresst wurde, und/oder ein Plättchen, das vorgegebene Anforderungen nicht erfüllt, insbesondere eine gewisse Mindestgröße unterschreitet, ausgesondert, insbesondere ausgesiebt, und/oder dem Walzwerk erneut zugeführt werden, bevorzugt automatisch. Insbesondere für die kommerzielle Fertigung ist es von Vorteil, wenn das Verpressen mit einer elektrisch betreibbaren Maschine erfolgt. Bei der elektrisch betreibbaren Maschine kann es sich beispielsweise um das vorstehend genannte Walzwerk oder den vorstehend genannten Flocker handeln.

Bevorzugt ist das Nahrungsmittelerzeugnis dadurch herstellbar oder hergestellt, dass das in körniger oder granularer Form vorliegende, rieselfähige kristalline Lebensmittel unmittelbar zu dem oder den formstabilen, kompaktierten Plättchen verpresst wird. Das in körniger oder granularer Form vorliegende, rieselfähige kristalline Lebensmittel wird also nicht zuerst in ein größere Platte verpresst, die anschließend noch zerkleinert werden muss, um die formstabilen, kompaktierten Plättchen zu erhalten. Ggf. kann dem Verpressen ein Verfahrensschritt zur mechanischen Größentrennung der hergestellten Plättchen nachgeordnet sein, insbesondere können die hergestellten Plättchen hierzu gesiebt werden.

Weitere vorteilhafte Weiterbildungen des erfindungsgemäßen Verfahrens ergeben sich in analoger Weise aus den Weiterbildungen des erfindungsgemäßen Nahrungsmittelerzeugnisses und umgekehrt.

Nachfolgend wird die Erfindung anhand einer vorteilhaften Ausführungsform unter Bezugnahme auf die beigefügte Zeichnung beschrieben.

Es zeigen:
- Fig. 1: eine Draufsicht auf ein Walzwerk zur Herstellung von Salz- plättchen,
- Fig. 2: einen Schnitt entlang Linie 2-2 in Fig. 1 und
- Fig. 3: eine Draufsicht auf mit dem Walzwerk aus Fig. 1 hergestellte Salzplättchen.

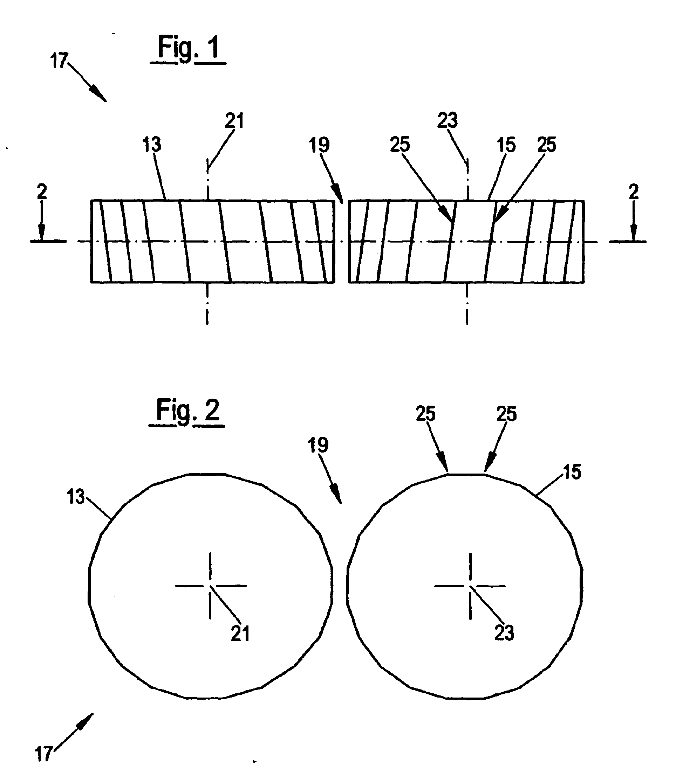

Das in den Fig. 1 und 2 dargestellte Walzwerk 17 zur Herstellung von erfindungsgemäßen Salzplättchen aus rieselfähigem Salz umfasst zwei gegenläufige Walzen 13, 15, zwischen denen ein Spalt 19 ausgebildet ist. Die Walzen 13, 15 sind um Achsen 21, 23 drehbar gelagert.

Die Walzen 13, 15 sind an ihren Oberfächen derart profiliert, dass sich in dem Schnitt in Fig. 2 ein regelmäßiges Vieleck ergibt, wobei die Profilkanten 25 gegenüber den Achsen 21, 23 leicht geneigt sind (Fig. 1).

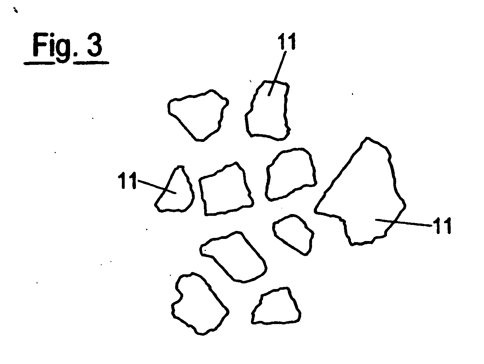

Der Spalt 19 ist aufgrund der Anordnung und Walzenform der Elemente 13, 15 trichterartig geformt, um für von oben zugeführtes rieselfähiges Salz eine sich verengende Passage zu bilden, wobei das zugeführte Salz durch die gegenläufige Bewegung der Walzen 13, 15 zu formstabilen, kompaktierten Salzplättchen 11, wie sie in Fig. 3 dargestellt sind, verpresst wird, die dann nach unten aus dem Walzwerk 17 herausfallen.

Aus Fig. 3, in der mehrere Salzplättchen 11 dargestellt sind, ist erkennbar, dass die derart hergestellten Salzplättchen 11 jeweils eine ungleichmäßige Form aufweisen und sich in Größe und Form voneinander unterscheiden. Die in Fig. 3 gezeigten Salzplättchen 11 sind zumindest im Wesentlichen maßstabsgetreu dargestellt. Die Salzplättchen 11 weisen eine Dicke von ca. 1 mm (aufgrund der gewählten Ansicht in Fig. 3 nicht erkennbar) und eine laterale Erstreckung von ca. 1 cm bis 2,5 cm auf. Durch die Erfindung ergeben sich neue Einsatz- und Verwendungsmöglichkeiten für das jeweilige, dem Nahrungsmittelerzeugnis zugrunde gelegte Lebensmittel.

### Bezugszeichenliste:

- 11: Salzplättchen
- 13: Walze
- 15: Walze
- 17: Walzwerk
- 19: Spalt
- 21: Drehachse
- 23: Drehachse
- 25: Profilkante

## Patentansprüche

1. Nahrungsmittelerzeugnis in Form eines ein kristallines Lebensmittel, insbesondere Salz enthaltenden oder aus dem kristallinen Lebensmittel bestehenden, formstabilen, kompaktierten Plättchens (11) oder einer derartigen Tablette, wobei das Plättchen (11) oder die Tablette eine Vielzahl von Körnern oder Granulaten des kristallinen Lebensmittels umfasst, insbesondere dadurch herstellbar oder hergestellt, dass ein in körniger oder granularer Form vorliegendes, rieselfähiges kristallines Lebensmittel mit essbaren Zusatzstoffen, ausgewählt aus Gewürzen oder Kräutern versetzt ist und ohne Zugabe von Feuchtigkeit und/oder ohne Zusatz eines Binde- oder Klebemittels zu dem formstabilen, kompaktierten Plättchen (11) oder der Tablette verpresst wird.

2. Nahrungsmittelerzeugnis nach Anspruch 1,
**dadurch gekennzeichnet,**
**dass** das Nahrungsmittelerzeugnis mehrere Plättchen (11) oder Tabletten umfasst, wobei die Plättchen (11) oder Tabletten dieselbe Dicke und/oder voneinander abweichende Formen und/oder Größen aufweisen.

3. Nahrungsmittelerzugnis nach zumindest einem der vorstehenden Ansprüche,
**dadurch gekennzeichnet,**
**dass** das jeweilige Plättchen (11) oder die jeweilige Tablette eine Dicke von 0,1 mm bis 3 mm, insbesondere 0,5 bis 1 mm, eine Größe von höchstens 6 cm, insbesondere von 0,5 bis 2 cm, bevorzugt 1 bis 1,5 cm, und/oder eine ungleichmäßige Form aufweist.

4. Nahrungsmittelerzeugnis nach zumindest einem der vorstehenden Ansprüche,
**dadurch gekennzeichnet,**
**dass** die essbaren Zusatzstoffe aus der Gruppe ausgewählt sind, die aus insbesondere gerebelten Kräutern, einem insbesondere ölhaltigen Gewürz, einer Kräutermischung, einer Gewürzmischung und beliebigen Kombinationen aus zwei oder mehr der vorstehenden essbaren Zusatzstoffe besteht.

5. Nahrungsmittelerzeugnis nach Anspruch 4,
**dadurch gekennzeichnet,**
**dass** das Plättchen (11) 1 bis 15 Gew.-%, insbesondere 4 bis 10 Gew.-%, bevorzugt 6 bis 8 Gew.-%, Kräuter enthält.

6. Nahrungsmittelerzeugnis nach Anspruch 4 oder 5,
**dadurch gekennzeichnet,**
**dass** das Plättchen (11) 1 bis 10 Gew.%, insbesondere 3 bis 6 Gew.%, bevorzugt 4 bis 5 Gew.%, Gewürz enthält.

7. Nahrungsmittelerzeugnis nach zumindest einem der Ansprüche 4 bis 6,
**dadurch gekennzeichnet,**
**dass** das Plättchen (11) 1 bis 10 Gew.-%, insbesondere 2 bis 8 Gew.%, bevorzugt 4 bis 6 Gew.-%, Kräuter-, Gewürz- oder Kräuter-Gewürzmischung enthält.

8. Verfahren zur Herstellung eines Nahrungsmittelerzeugnisses, bei dem ein in körniger oder granularer Form vorliegendes, kristallines Lebensmittel in eine Vielzahl von Körnern oder Granulaten umfassende, formstabile Einheiten gebracht wird, wobei das Lebensmittel, insbesondere Salz, in rieselfähiger Form vor und/oder bei dem Verpressen mit essbaren Zusatzstoffen, ausgewählt aus Gewürzen oder Kräutern versetzt wird und ohne Zugabe von Feuchtigkeit und/ oder ohne Zusatz eines Binde- oder Klebemittels zu das kristalline Lebensmittel enthaltenden oder aus dem kristallinen Lebensmittel bestehenden, kompaktierten Plättchen oder Tabletten verpresst wird.

9. Verfahren nach Anspruch 8,
**dadurch gekennzeichnet,**
**dass** das Verpressen ohne Zugabe von Feuchtigkeit, ohne Zusatz eines Binde- oder Klebemittels, pressformlos und/oder mit Körnern oder Granulaten mit einem Durchmesser von 0 bis 2 mm, insbesondere 1 bis 1,5 mm, bevorzugt 1,2 bis 1,3 mm, erfolgt.

10. Verfahren nach Anspruch 8 oder 9,
**dadurch gekennzeichnet,**
**dass** das Verpressen mittels eines Walzwerks (17) erfolgt, dem das rieselfähige Lebensmittel zugeführt wird.

11. Verfahren nach Anspruch 10,
**dadurch gekennzeichnet,**
**dass** das Walzwerk (17) zwei gegenläufige Walzen (13, 15), insbesondere mit profilierter Walzenoberfläche, und einen dazwischen ausgebildeten Spalt (19) umfasst, in dem das rieselfähige Lebensmittel gepresst wird, wobei bevorzugt das rieselfähige Lebensmittel den Walzen (13, 15) derart zugeführt wird, dass sich über dem Spalt (19) ein Rückstau an kristallinem Lebensmittel ausbildet.

12. Verfahren nach Anspruch 10 oder 11,
**dadurch gekennzeichnet,**
**dass** rieselfähiges Lebensmittel, das bei einem Durchlauf durch das Walzwerk (17) nicht verpresst wurde, und/oder ein Plättchen (11), das vorgegebene Anforderungen nicht erfüllt, insbesondere eine gewisse Mindestgröße unterschreitet, ausgesondert, insbesondere ausgesiebt, und/oder dem Walzwerk (17) erneut zugeführt wird.

13. Verfahren nach zumindest einem der Ansprüche 9 bis 12,
**dadurch gekennzeichnet,**
**dass** das in körniger oder granularer Form vorliegende, rieselfähige kristalline Lebensmittel unmittelbar zu dem oder den formstabilen, kompaktierten Plättchen (11) verpresst wird.

## Claims

1. A food product in the form of a crystalline food, in particular of a dimensionally stable, compacted platelet (11) containing salt or comprising the crystalline food or a tablet of this kind, wherein the platelet (11) or the tablet includes a plurality of grains or granules of the crystalline food, in particular manufacturable or manufactured in that a pourable crystalline food present in grain or granular form is mixed with edible additives selected from spices or herbs and is pressed without the addition of moisture and/ or without the addition of a binding agent or agglutinant to form the dimensionally stable, compacted platelets (11) or the tablet.

2. A food product in accordance with claim 1,
**characterised in that**
the food product includes a plurality of platelets (11) or tablets, with the platelets (11) or tablets having the same thickness and/(or having shapes and/or sizes differing from one another.

3. A food product in accordance with at least one of the preceding claims,
**characterised in that**
the respective platelet (11) or the respective tablet has a thickness of 0.1 mm to 3 mm, in particular 0.5 to 1 mm; a size of at most 6 cm, in particular of 0.5 to 2 cm, preferably 1 to 1.5 cm; and/or an irregular shape.

4. A food product in accordance with at least one of the preceding claims,
**characterised in that**
the edible additives are selected from the group which comprises herbs, in particular rubbed herbs, a spice, in particular a spice containing oil, a herb mixture, a spice mixture and any desired combinations of two or more of the above edible additives.

5. A food product in accordance with claim 4,
**characterised in that**
the platelet (11) contains 1 to 15% by weight, in particular 4 to 10% by weight, preferably 6 to 8% by weight herbs.

6. A food product in accordance with claim 4 or claim 5, **characterised in that**
the platelet (11) contains 1 to 10% by weight, in particular 3 to 6% by weight, preferably 4 to 5% by weight spices.

7. A food product (4) in accordance with at least one of the claims 4 to 6,
**characterised in that**
the platelet (11) contains 1 to 10% by weight, in particular 2 to 8% by weight, preferably 4 to 6% by weight of a mixture of herbs, spices or herbs and spices.

8. A method for manufacturing a food product, wherein a crystalline food present in grain or granular form is brought into dimensionally stable units including a plurality of grains or granules, wherein the food, in particular salt, is mixed, in pourable form and/or on the pressing, with edible additives, selected from spices or herbs, and is pressed without the addition of moisture and/or without the addition of a binding agent or agglutinant to form compacted platelets or tablets containing the crystalline food or consisting of the crystalline food.

9. A method in accordance with claim 8,
**characterised in that**
the pressing takes place without the addition of moisture, without the addition of a binding agent or agglutinant, without using a pressing mould and/or with grains or granules having a diameter of 0 to 2 mm, in particular 1 to 1.5 mm, preferably 1.2 to 1.3 mm.

10. A method in accordance with claim 8 or claim 9, **characterised in that**
the pressing takes place by means of a mill (17) to which the pourable food is supplied.

11. A method in accordance with claim 10,
**characterised in that**
the mill (17) includes two oppositely running rollers (13, 15), in particular with a profiled roller surface, and a gap (19) formed therebetween in which the pourable food is pressed, with the pourable food preferably being supplied to the rollers (13, 15) such that a backlog of crystalline food forms across the gap (19).

12. A method in accordance with claim 10 or claim 11, **characterised in that**
pourable food, which was not pressed in a passage through the mill (17), and/or a platelet (11), which does not satisfy the predefined demands, which in particular falls below a specific minimum size, is separated out, in particular sieved out, and/or is supplied to the mill (17) again.

13. A method in accordance with at least one of the claims 9 to 12, **characterised in that**
the pourable crystalline food present in grain or granular form is pressed directly to the dimensionally stable, compacted platelet or platelets (11).

## Revendications

1. Denrée alimentaire sous la forme d'une plaquette (11) compactée à forme solide, ou d'une tablette de ce genre, contenant un produit alimentaire cristallin, en particulier du sel, ou constituée de ce produit alimentaire cristallin, ladite plaquette (11) ou ladite tablette comprenant une pluralité de grains ou de granulés du produit alimentaire cristallin, fabriqué ou susceptible d'être fabriqué en particulier en ce qu'un produit alimentaire cristallin et susceptible de s'écouler, se présentant sous forme de grains ou de granulés, est mélangé avec des produits additifs comestibles choisis parmi les épices ou les herbes, et est pressé sans apport d'humidité et/ou sans addition d'un agent liant ou collant pour donner la plaquette (11) compactée à forme solide ou la tablette.

2. Denrée alimentaire selon la revendication 1,
**caractérisée en ce que** la denrée alimentaire comprend plusieurs plaquettes (11) ou tablettes, telles que les plaquettes (11) ou les tablettes ont la même épaisseur et/ou des formes et/ou des tailles différentes les unes des autres.

3. Denrée alimentaire selon l'une au moins des revendications précédentes,
**caractérisée en ce que** la plaquette respective (11) ou la tablette respective a une épaisseur de 0,1 mm à 3 mm, en particulier 0,5 à 1 mm, une taille au maximum de 6 cm, en particulier de 0,5 à 2 cm, de manière préférée 1 à 1,5 cm, et/ou une forme irrégulière.

4. Denrée alimentaire selon l'une au moins des revendications précédentes,
**caractérisée en ce que** les produits additifs comestibles sont choisis parmi le groupe formé par des herbes, en particulier hachées, des épices contenant en particulier de l'huile, un mélange d'herbes, un mélange d'épices et des combinaisons quelconques de deux ou plusieurs des produits additifs comestibles précités.

5. Denrée alimentaire selon la revendication 4,
**caractérisée en ce que** la plaquette (11) contient 1 à 15 % en poids, en particulier 4 à 10 % en poids, de façon préférée de 6 à 8 % en poids d'herbes.

6. Denrée alimentaire selon la revendication 4 ou 5,
**caractérisée en ce que** la plaquette (11) contient de 1 à 10 % en poids, en particulier de 3 à 6 % en poids, de façon préférée de 4 à 5 % en poids d'épices.

7. Denrée alimentaire selon l'une au moins des revendications 4 à 6, **caractérisée en ce que** la plaquette (11) contient de 1 à 10 % en poids, en particulier de 2 à 8 % en poids, et de façon préférée de 4 à 6 % en poids d'un mélange d'herbes, d'épices ou d'un mélange herbes/épices pour

8. Procédé pour la fabrication d'une denrée alimentaire, dans lequel un produit alimentaire cristallin qui se présente sous forme de grains ou de granulés est amené sous la forme d'unité à forme solide comprenant une pluralité de grains ou de granulés, dans lequel le produit alimentaire, en particulier du sel, est mélangé avec des produits additifs comestibles avant et/ou lors du pressage, choisis parmi des épices ou des herbes et est pressé, sans apport d'humidité et/ou sans apport d'un agent liant ou collant, pour donner la plaquette ou la tablette compactée contenant le produit alimentaire cristallin et/ou constituée du produit alimentaire cristallin.

9. Procédé selon la revendication 8,
**caractérisé en ce que** le pressage a lieu sans apport d'humilité, sans addition d'agent liant ou collant, en l'absence d'un moule de pressage, et/ou avec des grains ou des granulés présentant un diamètre de 0 à 2 mm, en particulier 1 à 1,5 mm, de préférence de 1,2 à 1,3 mm.

10. Procédé selon la revendication 8 ou 9,
**caractérisé en ce que** le pressage a lieu au moyen d'une unité de laminage (17) à laquelle on alimente le produit alimentaire capable de s'écouler.

11. Procédé selon la revendication 10,
**caractérisé en ce que** l'unité de laminage (17) comprend deux cylindres (13, 15) tournant en sens contraire, en particulier avec des surfaces de cylindre profilées, et une fente (19) formée entre ces cylindres, dans laquelle le produit alimentaire capable de s'écouler est pressé, et le produit alimentaire capable de s'écouler est de préférence alimenté au cylindre (13, 15) de telle façon qu'il se forme au-dessus de la fente (19) une accumulation de produit alimentaire cristallin.

12. Procédé selon la revendication 10 ou 11,
**caractérisé en ce que** le produit alimentaire capable de s'écouler qui n'a pas été pressé lors d'une passe à travers l'unité de laminage (19), et/ou une plaquette (11) qui ne satisfait pas les exigences imposées, en particulier qui n'atteint par une certaine taille minimum, est sorti(e), en particulier par tamisage, et/ou est à nouveau alimenté(e) à l'unité de laminage (17).

13. Procédé selon l'une au moins des revendications 9 à 12,
**caractérisé en ce que** le produit alimentaire cristallin qui se présente sous forme de grains ou de granulés est immédiatement pressé pour donner la ou les plaquettes (11) compactée(s) de forme solide.
